# EUROPEAN PATENT SPECIFICATION

(11) **EP 2 119 584 B1**
(45) Date of publication and mention of the grant of the patent: **25.03.2015**
(21) Application number: 09006206.8
(22) Date of filing: 07.05.2009
(51) Int. Cl.: B60J 11/00

(54) **Supporting and housing assembly for a covering for a vehicle**
Trag- und Gehäuseanordnung für eine Fahrzeugabdeckung
Ensemble de support et de boîtier pour un couverture de véhicule

(30) Priority: 15.05.2008 IT MI20080887
(43) Date of publication of application: 18.11.2009
(73) Proprietor: Tavelli, Bruno, 21100 Varese (VA) (IT)
(72) Inventor: Tavelli, Bruno, 21100 Varese (VA) (IT)
(74) Representative: Cicogna, Franco

(56) References cited:
- DE-A1- 3 814 044
- DE-U1-202006 015 906

## Description

### BACKGROUND OF THE INVENTION

The present invention relates to a supporting and locking assembly, for example for vehicle protective coverings, which are also known as "caparisons".

In performing maintenance and/or repairing operations on cars, and on car assembling lines, the bodies of said cars are usually protected by protective elements since, in a repairing shop, they could be accidentally damaged by scratches, indentations and/or soiled by oils, lubricating materials or other soiling substances.

At present, car bodies are conventionally protected by covering them by protective cloth material, usually having a soft texture.

The protective cloth materials are usually locked to the car body by magnets arranged in said cloth materials, see for instance document DE 38 14 044, to lock the latter in contact with the car body, or by suction cup adapted to meet the same function.

However, the use of the suction cups, if the vehicle body is not sufficiently cleaned or dried, could not be efficient, and could cause a partial or full detachment of the protective cloth article from the vehicle.

Moreover, a magnet usually draws metal debris material, and metal powders thereto; in such a case, these metal debris particles, in contact with the painted body surface, could cause scratches or abradings, and could generally damage the vehicle body, in particular if the protective cloth article is applied and detached for many times, since said protective "caparison" would be caused to rub against the painted body.

Prior locking members are usually built-in in the protective cloth material or article, and in the latter is usually also built-in an intermediate construction arranged between the magnet and metal surface of the vehicle, and including projections or ridges to provide at least a recess between the vehicle metal surface and magnet, in which recess metal particles could collect. In the prior art, both the mentioned intermediate construction and magnet are clamped to the cloth article (for example the intermediate construction is coupled by thermosealing and the magnet is permanently arranged inside the cloth protective material).

The Applicant has made a supporting and locking assembly for supporting a covering for vehicles, in which both the mentioned magnet and intermediate construction or structure are advantageously of an interexchangeable type and coupled to one another, for example by a fitting type of coupling, advantageously of a removable configuration. This allows, depending on the application in which the supporting and locking assembly must be used, to select the type of magnet and intermediate structure specifically suitable for the intended application, before connecting the overall assembly to the protective cloth material.

While the prior supporting and locking assembly of the same Applicant has been found as satisfactory, it has also been found that it would be susceptible to further improvements.

### SUMMARY OF THE INVENTION

Thus, the aim of the present invention is just that of two further improve the above disclosed prior assembly of the same Applicant, and, in particular, to provide an improved supporting and locking assembly for supporting and locking a protective covering on/to a vehicle body.

The above aim is achieved by a supporting and locking assembly having the features of the herein enclosed claim 1.

### BRIEF DESCRIPTION OF THE DRAWINGS

Further characteristics and advantages of the supporting and locking assembly according to present invention will become more apparent hereinafter from the following detailed disclosure, herein provided as an exemplary and not limitative illustration of the invention, with reference to the schematic accompanying drawings, where;
Figure 1 is a side view of the supporting assembly according to an embodiment of the present invention;
Figure 2 is a top plan view of the supporting assembly shown in figure 1;
Figure 3s is a further top plan view of the supporting and locking assembly according to a further embodiment of the present invention;

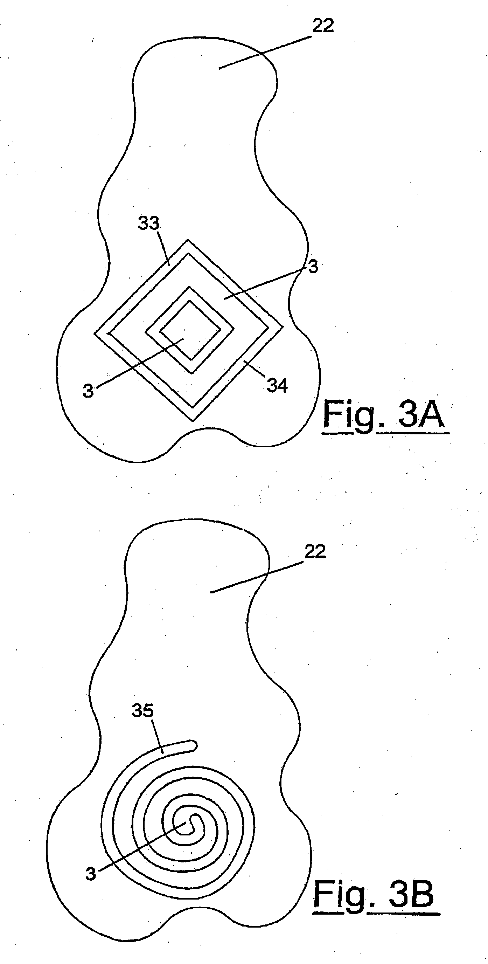

Figure 3b is a further top plan view of the supporting and locking assembly according to a further embodiment of the present invention;
   and

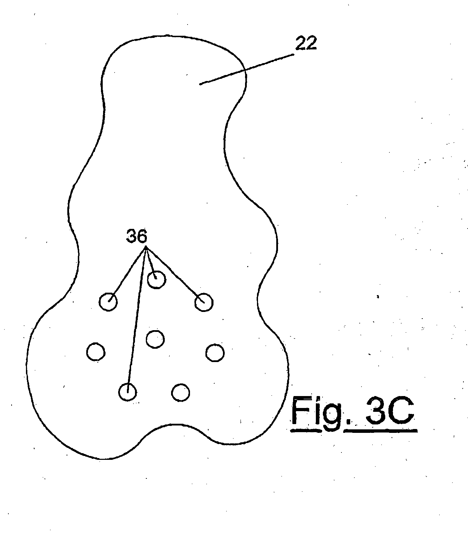

Figure 3c is yet another top plan view of the supporting and locking assembly according to a further embodiment of the present invention.

### DESCRIPTION OF THE PREFERRED EMBODIMENTS

With reference to the above mentioned drawing figures, the supporting and locking assembly, for example for car or vehicle protective coverings, comprises at least a magnet 2 which can be associated with a covering article, to removably connect said covering to the metal surface of the vehicle, and an intermediate structure or construction, to be arranged between said magnet and vehicle metal surface, thereon the supporting assembly is applied.

Said intermediate structure comprises a plurality of projections or ridges-lugs, adapted to define at least a seat or recess between said vehicle metal surface and said magnet, for collecting therein metal debris particles.

In the embodiment being shown in the accompanying figures, said magnet 2 is engaged in a housing 20 formed on the top surface 21 of a fabric or plastics material piece. Said piece or flap is then removably coupled to the covering, the so conventionally called "cloth". Likewise, according to the present invention, the magnet arranged in its housing can be directly coupled on the bottom surface of the covering, at a point thereat said covering is attached to the vehicle body.

On the bottom surface 22 of said piece or flap, is associated the intermediate structure 30, which comprises a plurality of projections or ridges adapted to define a plurality of seat or recesses 3 having, as a base thereof, the bottom surface of said piece or bottom surface of the covering and having, as walls thereof, those same projections.

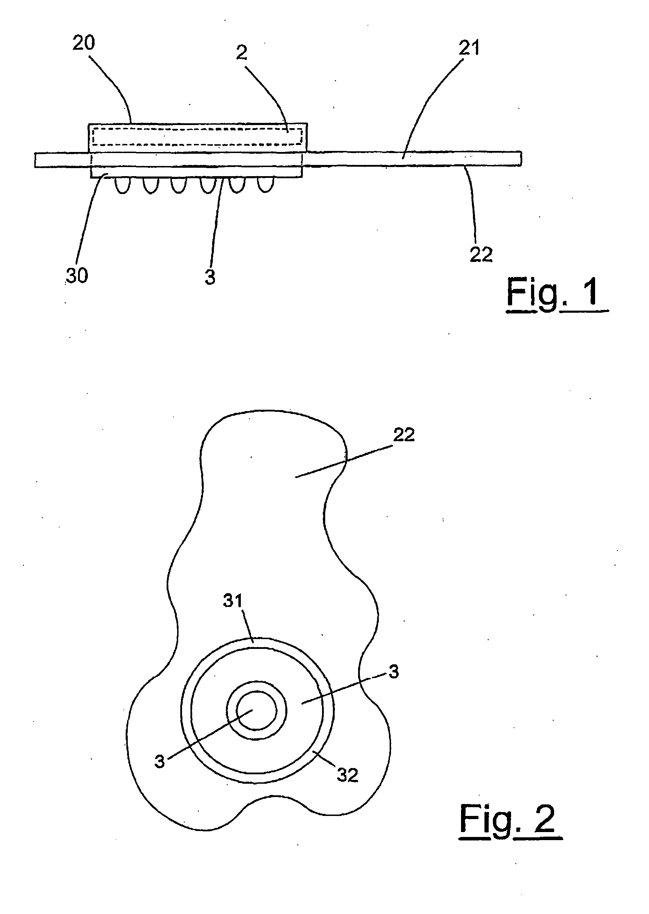

In particular, the intermediate structure 30 can be removed from the cloth and replaced by a further intermediate structure of a different construction (for example by one of those shown in figures 2, 3a-3c).

Moreover, also said magnet can be advantageously removed from its housing (for example from the bottom after having removed the intermediate structure) and replaced by any other magnet having different size and shapes, depending on requirements.

Figure 2 shows a further embodiment of the invention in which the intermediate structure comprises a pair of projections each of which including a ring element 31 or 32, said ring elements being arranged concentrically with respect to one another. Said seats or recesses are respectively formed inside the smaller ring element and in the space formed between the two ring elements.

Figure 3a shows a further embodiment of the invention, in which said intermediate structure comprises a plurality of substantially quadrangular projections, one 33 whereof is arranged inside the other 34. Said seats or recesses are respectively formed inside the smaller square in the space formed between the two squares.

Figure 3b shows a further embodiment of the invention, in which said structure is formed by a spiral or coil arrangement 35. Said recessed are respectively formed between adjoining circumferences inside the spiral arrangement.

Figure 3c shows a further embodiment of the invention, in which said structure is formed by a plurality of projections defined by a plurality of pegs 36, all said pegs having preferably the same height.

The edge of said projections will contact the vehicle body, so as to closed the recesses by the vehicle body surface, thereby causing the metal debris particles drawn toward the magnet to be substantially enclosed in said recesses.

The material designed for forming said intermediate structure is advantageously a material having a high friction coefficient in contact with the vehicle body. For example, a suitable material would be a rubber or silicone or PVC. Moreover, the surfaces of said projections contacting the vehicle body can be coated by a soft coating material, to dampen possible rubbings.

The recesses formed between the projections of the intermediate structure and bottom surface of the piece arranged therebetween and the magnet have such a size as to hold therein the metal debris particles, without however pressing the latter between the magnet and body surface, so as to prevent possible scratches to the vehicle body. The magnet, in particular, will provide an optimum adhering or bonding with the surface said magnet is engaged with.

The supporting and locking assembly according to the present invention can be used in very simple and flexible manner.

It should be apparent that the above disclosed supporting and locking assembly according to the invention is susceptible to several variations and modifications, without departing from the scope of the appended claims; moreover, it should be also apparent that, in practicing the invention, the materials, shape and size of the shown details can be any, depending on requirements.

## Claims

1. A supporting and locking assembly for a protective covering for a vehicle, comprising: at least a magnet (2) housed in a magnet housing (20) to removably connect said covering to a metal surface of said vehicle, **characterized in that** said housing is formed either on a top surface of a fabric or plastic material piece (21) removably coupled to the covering, or directly coupled on the bottom surface of the covering, **that** said assembly further comprises an intermediate structure (30) arranged under said magnet and to be arranged between said magnet and said vehicle metal surface, said intermediate structure including a plurality of projections defining at leas a recess (3) between said vehicle metal surface and said magnet (2), to collect therein metal debris particles, and **that** both said intermediate structure and said magnet can be removed from said covering or said fabric or plastics material piece (21) thereby allowing said intermediate structure and said magnet to be replaced by different types of intermediate structures and magnets as required.

2. A supporting and locking assembly, according to claim 1, wherein said plurality of projections comprises a pair of projections, each of which comprises a ring element (31, 32), said ring elements being arranged concentrically with respect to one another.

3. A supporting and locking assembly, according to claim 1, wherein said plurality of projections are substantially quadrangular projections, one of said projections (33) being arranged inside another projection (34).

4. A supporting and locking assembly, according to claim 1, wherein said intermediate structure comprises a spiral arrangement (35) and said recesses are respectively formed between adjoining turns of said spiral arrangement.

5. A supporting and locking assembly, according to claim 1, wherein said plurality of projections comprises a plurality of pegs (36).

6. A supporting and locking assembly, according to claim 1, wherein said projections are made of a material having a high friction coefficient with respect to said vehicle metal surface.

7. A supporting and locking assembly, according to claim 6, wherein said projections are made of a rubber, silicone, or PVC material.

8. A supporting and locking assembly, according to claim 1, wherein the surfaces of said projections contacting said vehicle metal surface are coated by a soft coating to dampen any possible rubbings therebetween.

## Patentansprüche

1. Trag- und Verschlussanordnung für eine Schutzabdeckung für ein Fahrzeug, Folgendes umfassend: mindestens einen Magneten (2), der sich in einem Magnetgehäuse (20) befindet, um die Abdeckung lösbar mit einer Metalloberfläche des Fahrzeugs zu verbinden, **dadurch gekennzeichnet, dass** das Gehäuse entweder auf einer Oberseite eines Textil- oder Kunststoffmaterialstückes (21) gebildet ist, das lösbar mit der Abdeckung gekoppelt ist, oder direkt mit der Unterseite der Abdeckung gekoppelt ist, dass die Anordnung ferner eine Zwischenstruktur (30) umfasst, die unter dem Magneten angeordnet ist und zwischen dem Magneten und der Fahrzeug-Metalloberfläche anzuordnen ist, wobei die Zwischenstruktur mehrere Vorsprünge beinhaltet, die zwischen der Fahrzeug-Metalloberfläche und dem Magneten (2) mindestens eine Vertiefung (3) definieren, um darin Metallschmutzpartikel zu sammeln, und, dass sowohl die Zwischenstruktur als auch der Magnet von der Abdeckung oder dem Textil- oder Kunststoffmaterialstück (21) gelöst werden können, wodurch bei Bedarf der Austausch der Zwischenstruktur und des Magneten durch andere Arten von Zwischenstrukturen und Magneten ermöglicht wird.

2. Trag- und Verschlussanordnung nach Anspruch 1, wobei die mehreren Vorsprünge ein Paar aus Vorsprüngen umfassen, von denen jeder ein Ringelement (31, 32) umfasst, wobei die Ringelemente konzentrisch im Verhältnis zueinander angeordnet sind.

3. Trag- und Verschlussanordnung nach Anspruch 1, wobei die mehreren Vorsprünge im Wesentlichen viereckige Vorsprünge sind, wobei einer der Vorsprünge (33) innerhalb eines anderen Vorsprunges (34) angeordnet ist.

4. Trag- und Verschlussanordnung nach Anspruch 1, wobei die Zwischenstruktur eine Spiralanordnung (35) umfasst und die Vertiefungen entsprechend zwischen benachbarten Windungen der Spiralanordnung gebildet sind.

5. Trag- und Verschlussanordnung nach Anspruch 1, wobei die mehreren Vorsprünge mehrere Zapfen (36) umfassen.

6. Trag- und Verschlussanordnung nach Anspruch 1, wobei die Vorsprünge aus einem Material mit hohem Reibungskoeffizienten gegenüber der Fahrzeug-Metalloberfläche bestehen.

7. Trag- und Verschlussanordnung nach Anspruch 6, wobei die Vorsprünge aus Kautschuk, Silikon oder PVC bestehen.

8. Trag- und Verschlussanordnung nach Anspruch 1, wobei die Oberflächen der Vorsprünge, welche die Fahrzeug-Metalloberfläche kontaktieren, mit einer weichen Beschichtung beschichtet sind, um ein mögliches Scheuern zwischen ihnen zu dämpfen.

## Revendications

1. Assemblage de support et de verrouillage pour une couverture de protection pour un véhicule, comprenant : au moins un aimant (2) logé dans un boîtier d'aimant (20) afin de raccorder de manière détachable ladite couverture à une surface métallique dudit véhicule, **caractérisé en ce que** ledit boîtier est formé soit sur une surface du haut d'une toile ou d'un élément en matière plastique (21) accouplé(e) de manière détachable avec la couverture, soit est directement accouplé (e) sur la surface du bas de la couverture, **en ce que** ledit assemblage comprend en outre une structure intermédiaire (30) disposée en-dessous dudit aimant et devant être disposée entre ledit aimant et ladite surface métallique du véhicule, ladite structure intermédiaire comprenant une pluralité de projections définissant au moins un creux (3) entre ladite surface métallique du véhicule et ledit aimant (2) afin d'y collecter des particules de débris métalliques, et **en ce que**, à la fois ladite structure intermédiaire et ledit aimant peuvent être retirés de ladite couverture ou de ladite toile ou dudit élément en matière plastique (21) en permettant de la sorte à ladite structure intermédiaire et audit aimant d'être remplacés par différents types de structures intermédiaires et d'aimant tels que requis.

2. Assemblage de support et de verrouillage selon la revendication 1, dans lequel ladite pluralité de projections comprend une paire de projections, chacune d'entre elles comprenant un élément annulaire (31, 32), lesdits éléments annulaires étant disposés de manière concentrique l'un par rapport à l'autre.

3. Assemblage de support et de verrouillage selon la revendication 1, dans lequel ladite pluralité de projections sont des projections sensiblement quadrangulaires, l'une desdites projections (33) étant disposée à l'intérieur d'une autre projection (34).

4. Assemblage de support et de verrouillage selon la revendication 1, dans lequel ladite structure intermédiaire comprend un agencement spiralé (35), et lesdits creux étant respectivement formés entre des spires adjacentes dudit agencement spiralé.

5. Assemblage de support et de verrouillage selon la revendication 1, dans lequel ladite pluralité de projections comprend une pluralité de goupilles (36).

6. Assemblage de support et de verrouillage selon la revendication 1, dans lequel lesdites projections sont formées par un matériau ayant un coefficient de friction élevé en ce qui concerne ladite surface métallique du véhicule.

7. Assemblage de support et de verrouillage selon la revendication 6, dans lequel lesdites projections sont formées par du caoutchouc, de la silicone ou un matériau en PVC.

8. Assemblage de support et de verrouillage selon la revendication 1, dans lequel les surfaces desdites projections entrant en contact avec ladite surface métallique du véhicule sont revêtues par un revêtement souple afin d'amortir toutes les frictions possibles entre elles.
